# EUROPEAN PATENT APPLICATION

(11) **EP 2 058 981 A1**
(43) Date of publication of application: **13.05.2009**
(21) Application number: 07764263.5
(22) Date of filing: 20.07.2007
(51) Int. Cl.: H04L 12/28, H04Q 7/20

(54) **A METHOD, SYSTEM AND EQUIPMENT OF ACCESSING NETWORK FOR USER**

(30) Priority: 07.09.2006 CN 200610126859; 12.10.2006 CN 200610131904
(71) Applicant: Huawei Technologies Co., Ltd., Shenzhen, Guangdong Province 518129 (CN)
(72) Inventor: SHI, Youzhu, Shenzhen Guangdong 518129 (CN); ZHOU, Qing, Shenzhen Guangdong 518129 (CN); MAO, Lingzhi, Shenzhen Guangdong 518129 (CN); ZHANG, Ni, Shenzhen Guangdong 518129 (CN)
(74) Representative: Haley, Stephen
(86) International application number: PCT/CN2007/070336
(87) International publication number: WO 2008/031344

(57) **Abstract**

The present invention discloses a method and system for a user accessing a network, in which a user terminal obtains a requirement for an attribute of a network element, selects according to the requirement for the attribute of the network element a network element meeting a capability requirement of a service to be used, and accesses the network element meeting the capability requirement of the service to be used. The service requested by the user terminal can be implemented normally. Meanwhile, the present invention also discloses a user terminal and a Proxy Call Session Control Function (P-CSCF) discovery device.

## Description

### Field of the Invention

The present invention relates to service implementation technologies in communication system, and particularly, to a method, system and device for a user accessing a network to implement a service.

### Background of the Invention

The IP Multimedia Subsystem (IMS) is a subsystem supporting IP multimedia service and is proposed in Release 5 by the 3^{rd} Generation Partnership Project (3GPP). The IMS is characterized in that the Session Initiation Protocol (SIP) is adopted and that the IMS is access agnostic. The IMS is a multimedia control and call control platform in the Packet-Switched (PS) domain, supports session multimedia services and non-session multimedia services, and provides a common service platform for future multimedia applications. Reference can be made to relevant standards of the 3GPP for the detail definition of the IMS network.

Multiple types of services may be provided in the IMS network. An emergency call service is a service to provide emergency help in the case that the health, security and life/property of the individual/public are in danger. The communication network provides the emergency call service with high priority communication service, and routes a call to an optimum Public Security Access Point (PSAP) according to the location information of a calling user and the type of the emergency call service. The PSAP routes the call to an optimum Emergency Call Center (ECC) to be processed, and the ECC provides help for the user requesting the emergency call service rapidly.

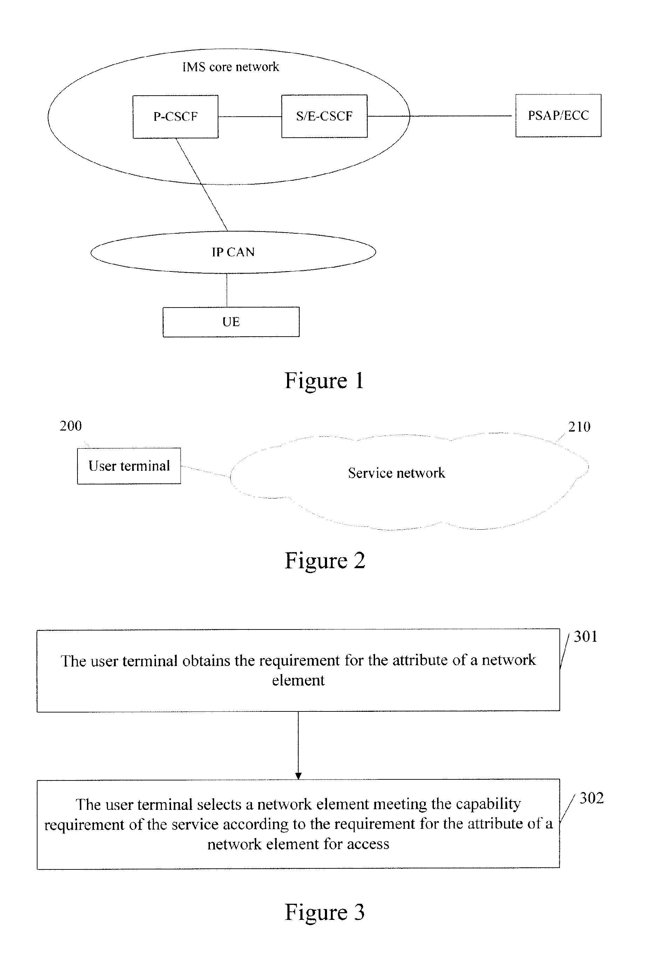

In order to support the emergency call service in the IMS network, an Emergency Call Session Control Function (E-CSCF) is defined in the IMS network for session control of the emergency call service. The emergency call service may be routed to the appropriate PSAP/ECC by the E-CSCF. Figure 1 is a conventional logic diagram illustrating a user terminal accessing the PSAP/ECC through the IMS network.

As shown in Figure 1, the IP Connectivity Access Network (IP CAN) is a physical channel through which the user terminal can access the packet core network and implements the functions of user terminal attachment, IP address allocation, and bearer resource control. The IP CAN also provides address information of a Proxy-CSCF (P-CSCF) to the user terminal. The IP CAN may be a network such as the General Packet Radio Service (GPRS) network, Wireless Local Area Network (WLAN), Asymmetric Digital Subscriber Loop (ADSL) network or Local Area Network (LAN).

The P-CSCF is a proxy call session control function for receiving the session signaling from the user terminal and sending the session signaling to the packet core network. The P-CSCF may be located in the visited network or the home network. The P-CSCF is configured to implement the service session function for the emergency call service in the area of the P-CSCF when an emergency call service request is processed.

The S-CSCF is a service call session control function for implementing the function of registration and session control for the user terminal in the packet core network.

The E-CSCF is an emergency call session control function for processing the emergency call service request of a user, routing the emergency call service request of the user to the PSAP/ECC. In case that the user is roaming, the E-CSCF is located in the visited network of the user terminal and thus the user can access the E-CSCF in the IMS network only through the P-CSCF in the visited network.

The P-CSCF accessed by the user terminal in the above network structure when the user is roaming may be located in the visited network or the home network.

If the P-CSCF is located in the home network, the emergency call service request will be routed to the P-CSCF in the home network according to the service capability requirements if the user terminal initiates an emergency call service. However, the P-CSCF in the home network cannot route the emergency call service request to the E-CSCF in the visited network properly. As a result, the emergency call service request fails. Therefore, the user terminal needs to select a P-CSCF supporting the emergency call service capability when initiating an emergency call service. The selected P-CSCF should be located in the visited area and support the selection of an E-CSCF.

In addition, besides the above emergency call service, the user may also need to select a P-CSCF with a required service capability to access the network in other cases. For example, the Resource and Admission Control Subsystem (RACS) is located in the visited network and manages the Quality of Service of a call session in the Telecommunication and Internet converged Services and Protocols for Advanced Networking (TISPAN). The P-CSCF interacts with the RACS to ensure the Quality of Service of a session. However, the Quality of Service of a session cannot be ensured if the P-CSCF in the home network cannot access the RACS in the visited network of the user. In order to access the RACS in the visited network, the system may therefore require that the user accesses the network through a P-CSCF in the visited network with the function of controlling the Quality of Service of a session. For another example, a P-CSCF has a capability for processing a mobile terminal different from the capability for processing a fixed terminal. Specifically, the P-CSCF is required to have the function of interacting with the Policy Decision Function (PDF) if the mobile terminal accesses the network in the GPRS manner, and the P-CSCF is required to have the function of interacting with the RACS if the user accesses the network using a fixed network. In other words, the requirements for the capability of the P-CSCF are different when terminals of different types access the network.

Currently, no solution is provided for the above problem in the current standards, that is, the problem that the P-CSCF accessed by the user cannot meet the capability requirement of the user service cannot be solved in the prior art.

### Summary of the Invention

An embodiment of the present invention provides a method for a user accessing a network which enables the user to select a network element meeting the capability requirement of a user service and to access the network element selected.

An embodiment of the present invention provides a system for a user accessing a network which enables the user to select a network element meeting the capability requirement of a user service and to access the network element selected.

An embodiment of the present invention provides a user terminal device which enables the user to select a network element meeting the capability requirement of a user service and to access the network element selected.

An embodiment of the present invention provides a proxy call session control function discovery device which enables the user to select a network element meeting the capability requirement of a user service and to access the network element selected.

The technical solutions according to embodiments of the present invention respectively are given as follows.

A method for a user accessing a network includes:
selecting, by a user terminal according to the requirement for an attribute of a network element, a network element meeting the capability requirement of a user service, and
accessing the network element meeting the capability requirement of the user service.

A system for a user accessing a network includes: a user terminal, configured to select a network element meeting the capability requirement of a user service according to the requirement for an attribute of a network element and accessing the network element selected; and
a service network, configured to provide the user terminal with the network element meeting the capability requirement of the user service.

A user terminal includes:
a network element attribute requirement reception unit, configured to receive notification information sent by a service network, determine the requirement for an attribute of a network element according to the notification information or a user service, and send the requirement for the attribute of a network element;
a network element selection unit, configured to receive the requirement for the attribute of a network element from the network element attribute requirement reception unit, send an attaching request containing the requirement for the attribute of a network element to the service network, and send information of a network element meeting the capability requirement of the service received from the service network, or select the network element meeting the capability requirement of the service according to attributes of network elements and sending information of the network element selected; and
a network element registration unit, configured to initiate registration to the network element selected by the network element selection unit.

A Proxy Call Session Control Function, P-CSCF, discovery device includes: a user interface unit, a data management unit and a protocol processing unit; where
the user interface unit is configured to receive and process a P-CSCF discovery request sent by a user terminal, send a P-CSCF attribute query message to the protocol processing unit, and send a P-CSCF discovery request response containing an attribute of an available P-CSCF to the user terminal upon receiving a query response message from the protocol processing unit;
the data management unit is configured to store attributes of P-CSCFs in a network;
the protocol processing unit is configured to receive the P-CSCF attribute query message sent by the user interface unit, obtain the attribute of the available P-CSCF by querying the data management unit, generate the query response message containing the attribute of the available P-CSCF, and send the query response message to the user interface unit.

As can be seen from the above, according to the technical solutions in accordance with the embodiments of the present invention, the user terminal selects the network element meeting the capability requirement of the service according to the requirement for the attribute of a network element to access, and thus the service requested by the user terminal can be implemented normally.

### Brief Description of the Drawings

The embodiments of the present invention are hereinafter described in detail with reference to the accompanying drawings so as to make the characteristics and merits of the present invention more apparent for those skilled in the art. In the drawings:

Figure 1 is a conventional logic diagram illustrating a user terminal accessing a PSAP/ECC through an IMS network;

Figure 2 is a diagram illustrating a structure of a system for a user accessing a network according to an embodiment of the present invention;

Figure 3 is a flow chart of a method for a user accessing a network according to an embodiment of the present invention;

Figure 4 is a diagram illustrating a structure of a system for a user accessing a network according to a first embodiment of the present invention;

Figure 5 is a diagram illustrating a specific structure of a user terminal according to the first embodiment of the present invention;

Figure 6 is a diagram illustrating a structure of a P-CSCF discovery device according to the first embodiment of the present invention;

Figure 7 is a flow chart of a method for a user accessing a network according to the first embodiment of the present invention;

Figure 8 is a diagram illustrating a structure of a system for a user accessing a network according to a second embodiment of the present invention;

Figure 9 is a diagram illustrating a structure of a user terminal according to the second embodiment of the present invention;

Figure 10 is a diagram illustrating a structure of a P-CSCF discovery device according to the second embodiment of the present invention;

Figure 11 is a flow chart of a method for a user accessing a network according to the second embodiment of the present invention;

Figure 12 is a diagram illustrating a structure of a system for a user accessing a network according to a third embodiment of the present invention;

Figure 13 is a diagram illustrating a specific structure of a user terminal and a connection relation between the user terminal and a DM server according to the third embodiment of the present invention; and

Figure 14 is a flow chart of a method for a user accessing a network according to the third embodiment of the present invention.

### Detailed Description of the Embodiments

Embodiments of the present invention are hereinafter described in detail with reference to the accompanying drawings to make the technical scheme and merits thereof more apparent.

In an embodiment of the present invention, a user terminal selects a network element meeting the capability requirement of the user service according to the requirement for an attribute of a network element and accesses the network element selected.

Figure 2 is a diagram illustrating a structure of a system for a user accessing a network according to an embodiment of the present invention. As shown in Figure 2, the system includes a user terminal 200 and a service network 210.

The user terminal 200 in the system selects a network element meeting the capability requirement of the user service according to the requirement for the attribute of a network element, and accesses the network element selected. The service network 210 in the system provides the user terminal 200 with the network element meeting the capability requirement of the user service.

Figure 3 is a flow chart of a method for a user accessing a network according to an embodiment of the present invention. As shown in Figure 3, the method comprises

301: The user terminal 200 obtains the requirement for the attribute of a network element.

302: The user terminal 200 selects a network element meeting the capability requirement of the user service according to the requirement for the attribute of a network element, and accesses the network element selected.

As can be seen from the above, the user terminal selects the network element meeting the capability requirement of the user service according to the requirement for the attribute of a network element and accesses the network element selected in the embodiment of the present invention. Thus, the user terminal may implement a service requested by the user through accessing the network element selected.

The technical scheme of the present invention is hereinafter described in detail with the reference that the service is an emergency call service, the capability is emergency call service processing capability and the network element is a P-CSCF.

Embodiment 1

In a first embodiment, it is supposed that a user terminal is roaming and has accessed the home network, that is, the user terminal has selected the P-CSCF in the home network to process the service; further, it is supposed that both the visited network and the home network of the user terminal are IMS networks, the IP-CAN of the visited network is a GPRS network, and the service request initiated by the user terminal is an emergency call service request.

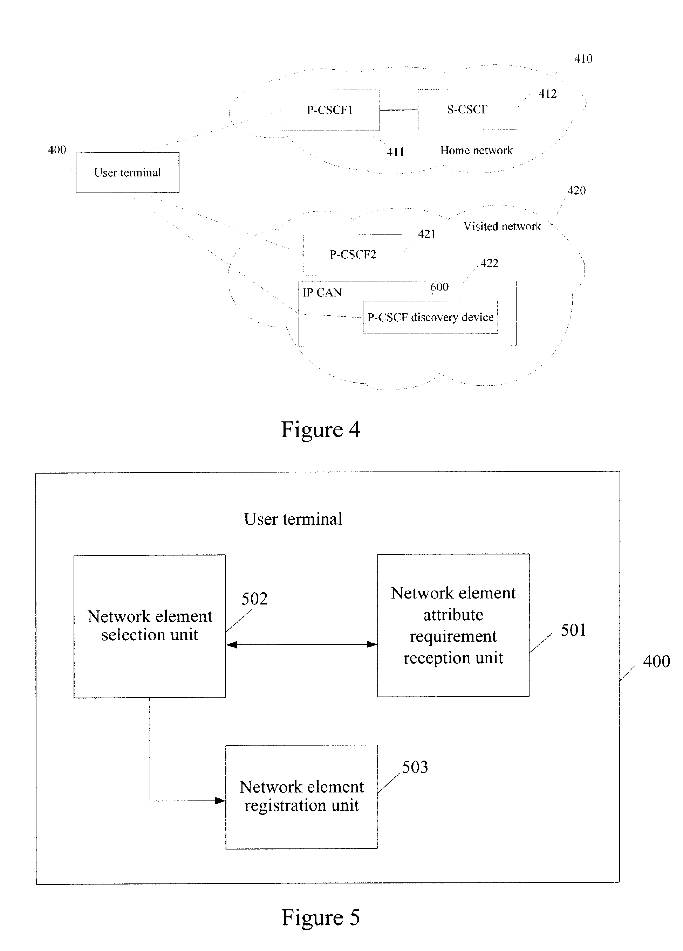

Figure 4 is a diagram illustrating a specific structure of a user terminal according to the first embodiment of the present invention. As shown in Figure 4, the system includes a user terminal 400, a home network 410 and a visited network 420. The home network 410 includes a P-CSCF1 411 and an S-CSCF 412. The visited network 420 includes a P-CSCF2 421 and an IP CAN 422. The IP CAN includes a P-CSCF discovery device 600. By comparing the system in this embodiment with that shown in Figure 2, it can be known that the home network 410 and the visited network 420 in this embodiment are an example of the service network 310 in the system shown in Figure 2.

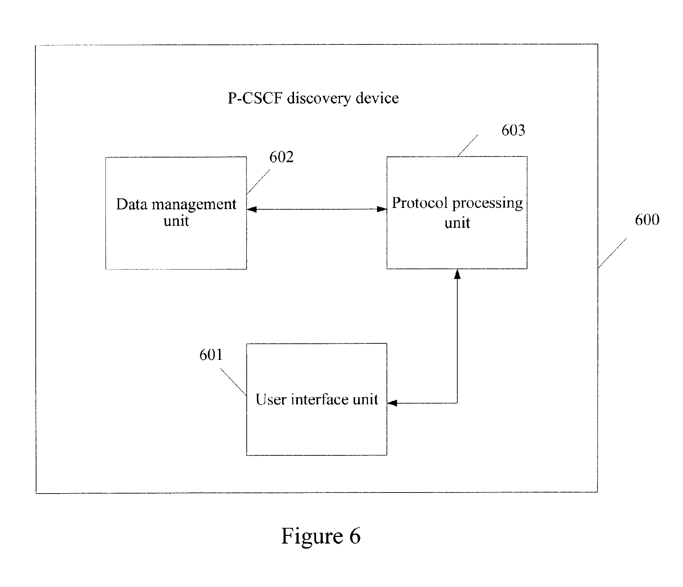

The user terminal 400 sends an emergency call service request to the home network 410. The emergency call service request is forwarded to the S-CSCF 412 through the P-CSCF1 411. Upon receiving the emergency call service request, the S-CSCF 412 sends information of the requirement for the attribute of a network element to the user terminal 400 to notify the user terminal 400 to select a P-CSCF supporting the emergency call service in the visited network 420 to initiate the emergency call service request. The requirement for the attribute of a network element is forwarded to the user terminal 400 through the P-CSCF1 411. Upon receiving the requirement for the attribute of a network element, the user terminal 400 sends a P-CSCF discovery request to the IP CAN 422 in the visited network 402 to select an appropriate P-CSCF for the emergency call service request, the P-CSCF discovery request containing the requirement for the attribute of the P-CSCF. The IP CAN 422 is a GPRS network. The P-CSCF discovery device 400 receives the P-CSCF discovery request sent by the user terminal 400, selects a P-CSCF used for the emergency call service request in the visited network, and sends address information of the selected P-CSCF to the user terminal 400. In this embodiment, it is supposed that the address information is the P-CSCF2 421. The user terminal 400 initiates the emergency call service request using the P-CSCF2 421. Figure 5 and Figure 6 respectively show a structure of the user terminal 400 and a structure of the P-CSCF discovery device 600 in the IP CAN 422.

Figure 5 is a diagram illustrating a specific structure of a user terminal according to the first embodiment of the present invention. As shown in Figure 5, the user terminal 400 includes a network element attribute requirement reception unit 501, a network element selection unit 502, and a network element registration unit 503.

The network element attribute requirement reception unit 501 is configured to receive information of the requirement for the attribute of a network element sent by the home network 410 or input by a user, and send the information to the network element selection unit 502. The network element selection unit 502 is configured to send a P-CSCF discovery request to the P-CSCF discovery device 600, the P-CSCF discovery request containing the information of the requirement for the attribute of a P-CSCF, and send P-CSCF information contained in a P-CSCF discovery request response to the network element registration unit 503. The network element registration unit 503 is configured to initiate registration to the P-CSCF selected by the network element selection unit 502.

Figure 6 is a diagram illustrating a structure of a P-CSCF discovery device according to the first embodiment of the present invention. In the system shown in Figure 4, the P-CSCF discovery device 600 is configured to discover a P-CSCF when an emergency call service request is initiated. As shown in Figure 6, the P-CSCF discovery device 600 includes a user interface unit 601, a data management unit 602 and a protocol processing unit 603.

The user interface unit 601 is configured to receive and process the P-CSCF discovery request sent by the network element selection unit 502 in the user terminal 400 shown in Figure 5, i.e., a Packet Data Protocol (PDP) activation request sent by a designated Access Point Name (APN). The user interface unit 601 sends a P-CSCF attribute query message to the protocol processing unit 603 and receives a response message sent by the protocol processing unit 603. The user interface unit 601 sends a P-CSCF discovery request response containing the information of the P-CSCF2 to the network element selection unit 502 shown in Figure 5. The data management unit 602 is configured to store information of an attribute of a P-CSCF in the network. The protocol processing unit 603 is configured to receive the P-CSCF attribute query message sent by the user interface unit 601, obtain the attribute information of a P-CSCF meeting the requirement through the data management unit 602, generate the query response message containing the information of the P-CSCF2 meeting the requirement, and send the response message to the user interface unit 601.

Because the IP CAN 422 in this embodiment is a GPRS network, the interface protocol between the user interface unit 601 in the P-CSCF discovery device 600 and the network element selection unit 502 of the user terminal 400 shown in Figure 5 is the GPRS interface protocol. If the IP CAN 422 is other fixed networks such as WLAN or DSL network, the interface protocol between the user interface unit 601 and the user terminal 400 is the interface protocol of the corresponding network such as the Dynamical Host Configure Protocol (DHCP).

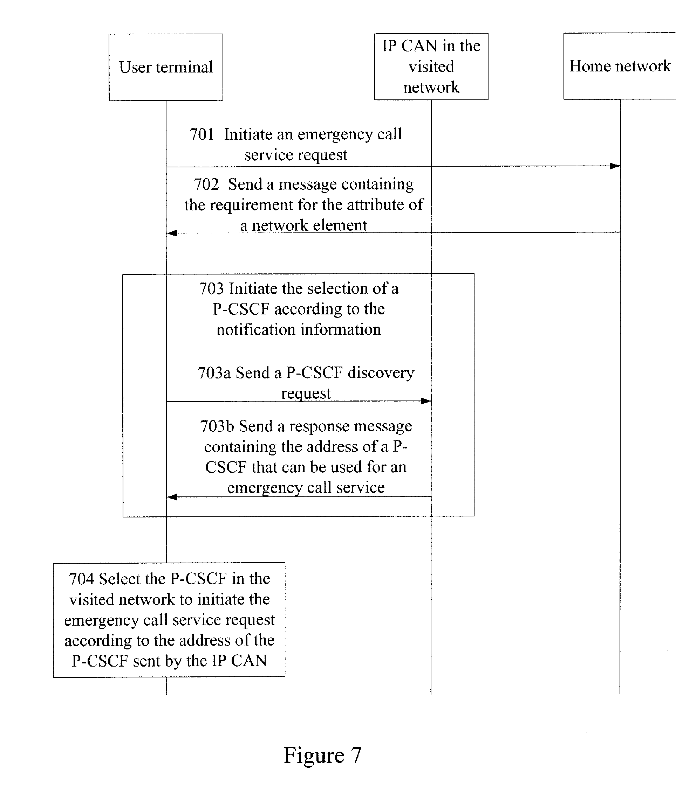

The structure of the system according to the first embodiment of the present invention has been described above. The system may implement a method according to this embodiment of the present invention shown in Figure 7.

Figure 7 is a flow chart of a method for a user accessing a network according to the first embodiment of the present invention. As shown in Figure 7, the method is described below.

701: The user terminal 400 sends an emergency call service request to the home network 410.

In 701, because the user terminal 400 has selected the P-CSCF in the home network 410 such as the P-CSCF1 411 to process a service, the emergency call service request is sent to the Call Session Control Function in the home network through the P-CSCF in the home network 410 when the user terminal 400 sends the emergency call service request. The emergency call service request may be emergency registration, emergency call or a service request related to an emergency call service such as an emergency message.

702: The home network 410 sends to the user terminal 400 a message containing the requirement for the attribute of a network element.

In 702, upon receiving the emergency call service request sent by the user terminal 400, the P-CSCF1 411 in the home network sends the message containing the requirement for the attribute of a network element to the user terminal 400; or the P-CSCF1 411 in the home network sends the emergency call service request to the S-CSCF 412 in the home network 410 and then the S-CSCF 412 notifies the P-CSCF1 411 to send the message containing the information of the requirement for the attribute of a network element.

In this embodiment, the requirement for the attribute of a network element is attribute information of P-CSCF re-selected by the user terminal 400. The message containing the attribute information of the network element is a SIP 380 message (or other SIP response messages). The attribute information of the network element may be added into the header field of the SIP 380 message, such as:

P_Acees-indicator: Service=Emgency; Node=P-CSCF; Location = visite;

where Service indicates the capability supported by the network element, the service being an emergency call service in this embodiment;

Node indicates the type of the network element to be re-selected, the node being the P-CSCF in this embodiment; and

Location indicates the location of the network element, the network element being in the visited network in this embodiment.

703: Selecting the network element, i.e., the P-CSCF, in the visited network 420 to access, according to the message containing the requirement for the attribute of a network element.

Because the visited network 420 is an IMS network in this embodiment, the user terminal 400 selects a P-CSCF in the visited network 420 with the capability of processing an emergency call service if the user terminal 400 is about to send an emergency call service request using the visited network 420. The user terminal 400 may select a P-CSCF in the visited network 420 in the following manners.

703a: The user terminal 400 sends a P-CSCF discovery request message to the IP CAN 422 in the visited network 420. The P-CSCF discovery request contains the requirement for the attribute of a network element, and specifically, the requirement is that the P-CSCF is required to support an emergency call service.

Because the IP CAN 422 is a GPRS network in this embodiment, a PDP activation request need be initiated through an APN and the P-CSCF discovery request is included in the PDP activation request. Indication information is added into the P-CSCF discovery request in 703a to indicate that the P-CSCF to be discovered is used for an emergency call service.

703b: The IP CAN 422 in the visited network 420 sends to the user terminal 400 a response message containing the address of the P-CSCF meeting the requirement of the emergency call service, such as the P-CSCF2 421.

704: The user terminal 400 selects the P-CSCF to access the IMS network according to the P-CSCF meeting the requirement of the emergency call service sent by the IP CAN 422.

Because the P-CSCF2 421 selected by the user terminal has the capability of processing an emergency call service, the emergency call service request may be processed normally.

As can be seen, in the above embodiment, the user terminal 400 does not know that the P-CSCF selected cannot meet the requirement of the service before initiating the emergency call service request, and thus the user terminal 400 still sends the emergency call service request through the P-CSCF in the home network 410 when initiating the emergency call service request. Upon receiving the emergency call service request of the user terminal 400, the home network 410 sends the requirement for the attribute of the network element to the user terminal 400 to notify the user terminal 400 to select a P-CSCF meeting the requirement for the attribute of a network element to access, i.e. to select an appropriate P-CSCF in the visited network 420 to access and initiate the emergency call service request.

Because the visited network 420 in this embodiment is an IMS network, the visited network 420 needs to select an appropriate P-CSCF when initiating an emergency call service request. The selection of the P-CSCF is implemented by a P-CSCF discovery process and indication information for an emergency call service is attached to the discovery request in the P-CSCF discovery process. Therefore, the address and other information of the P-CSCF used in an emergency call service in the visited network 420 are sent to the user terminal 400 in the discovery process. Then, the user terminal 400 may initiate an emergency call service request using the P-CSCF. The P-CSCF discovery device 600 sends only the address of one P-CSCF in the P-CSCF discovery process in this embodiment. However, addresses of multiple P-CSCFs may be sent if there are multiple P-CSCFs meeting the requirement. Then, the user terminal 400 may select one from the multiple P-CSCFs.

In addition, because the IP CAN 422 in the visited network 420 in this embodiment is a GPRS network, the P-CSCF discovery request sent by the user terminal 400 is a PDP activation request. If the IP CAN 422 is a fixed network such as WLAN and DSL network, the P-CSCF discovery request sent by the user terminal 400 is a DHCP request message. Option parameters of the DHCP request message may be extended to contain the information of a requirement for the attribute of a network element.

Because both the visited network 420 and the home network 410 in the system structure in this embodiment are IMS networks, the network elements through which the networks are accessed are both P-CSCFs. If the network is not an IMS network, the network element is an access device in the corresponding network. In this case, the user terminal 400 also needs to reselect a network element according to the information of the corresponding network element. The network element to be selected is not limited to a P-CSCF.

This embodiment is described by taking the emergency call service as an example. This embodiment of the present invention is however also applicable to other service types. For example, for a service request in which a requirement for Quality of Service has been subscribed, compared with the operation in this embodiment, the user may directly indicate the requirement for the attribute of a network element in 403, and thus obtain a related network element in the network to process the service and access the selected P-CSCF, where the service request initiated includes the requirement for Quality of Service.

In addition, besides the requirements for the service capabilities such as an emergency call service and Quality of Service capability, the requirement for a service capability may also be a requirement for an access of terminals of different types. For example, the requirements for the capability of the P-CSCF are different between the access of a mobile terminal and the access of a fixed terminal. The requirement for the service capability may also be a requirement for the service capability of the network where the network element is located. For example, it is required that the network where the access network element is located has the service capabilities such as Voice Call Continuity (VCC) and positioning service capability. Alternatively, the requirement for the service capability may also be a requirement for the service capability of the access network element itself.

The above embodiment provides a method for a user selecting a network element according to the requirement for the attribute of a network element sent by the network. According to the above embodiment, the network instructs the user to select a network element meeting the capability requirement of the user service when detecting that the network element accessed currently by the user cannot meet the capability requirement of the user service. Actually, if the user can select an access network element meeting the capability requirement of the user service when the user is attached to the IP access network, the problem that the network element accessed by the user cannot meet the capability requirement of the user service may be solved from the root. A second embodiment describes such an implementation method.

Embodiment 2

A second embodiment provides a method for a user accessing a network. In the method, a user terminal initiates an attaching request to be attached to an IP access network, and the IP access network sends an attaching request response message containing a list of available access network elements. The list includes one or more access network elements and the attributes thereof. The attribute of a network element includes location information of the network element, and/or capability information of the network element, and/or service capability of supporting different types of terminals. The user selects a network element meeting the capability requirement of the user service for access according to the attributes of the network elements. The user terminal sends an access request such as a SIP registration message to the network element.

For example, if a user needs to initiate an emergency call service, the user selects a P-CSCF in the visited network from the list of access network elements and sends a registration message to the P-CSCF in the visited network because the emergency call service can be provided only by the P-CSCF in the visited network. In another example, if a mobile terminal using the GPRS access needs to initiate an emergency call service, the mobile terminal selects a P-CSCF supporting the GPRS access to process the service.

In this embodiment, it is supposed that both the visited network and the home network of the user terminal are IMS networks, and the IP CAN in the visited network is a DSL network.

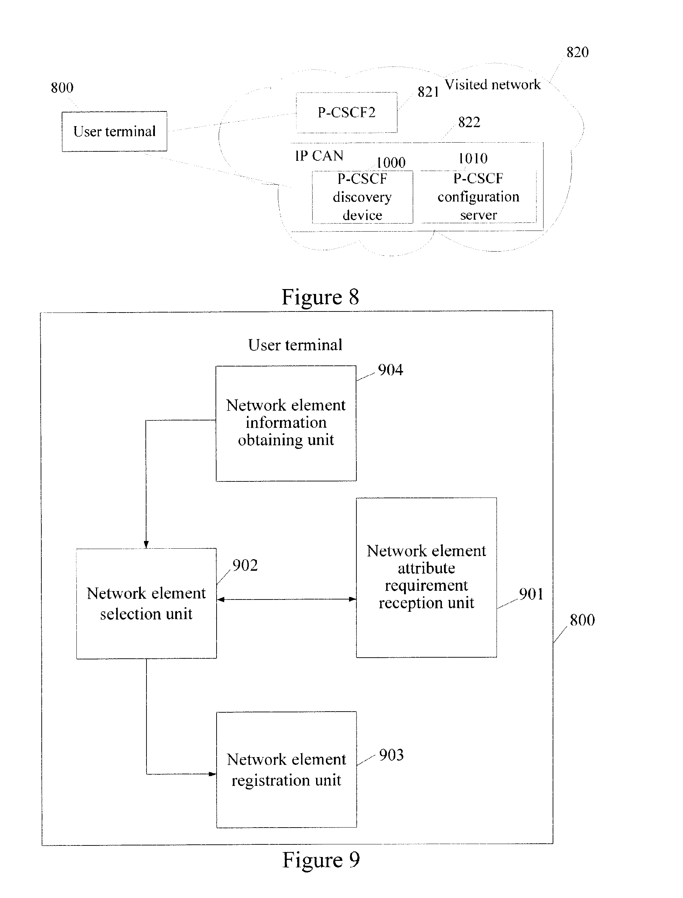

Figure 8 is a diagram illustrating a structure of a system for a user accessing a network according to the second embodiment of the present invention. As shown in Figure 8, the system includes a user terminal 800 and a visited network 820. The visited network 820 includes a P-CSCF2 821 and an IP CAN 822. The IP CAN 822 further includes a P-CSCF discovery device 1000 and a P-CSCF configuration server 1010.

The user terminal 800 is configured to send to the IP CAN 822 in the visited network 820 an attaching request (i.e. a P-CSCF discovery request) to initiate IP network attaching. The user terminal 800 receives an attaching request response message containing information of the attributes of available access network elements sent by the IP CAN 822. The IP CAN 822 is a DSL network. The P-CSCF discovery device 1000 in the IP CAN 822 receives the P-CSCF discovery request sent by the user terminal, selects available P-CSCFs in the visited network 820, sends the attaching request response message containing the list of the information of the available P-CSCFs to the user terminal 800. The P-CSCF configuration server 1010 configures the information of the attributes of all the P-CSCFs in the visited network 820 into the P-CSCF discovery device 1000. The user terminal 800 selects the P-CSCF2 821 meeting the requirement for the attribute of a network element from the list and sends the emergency call service request.

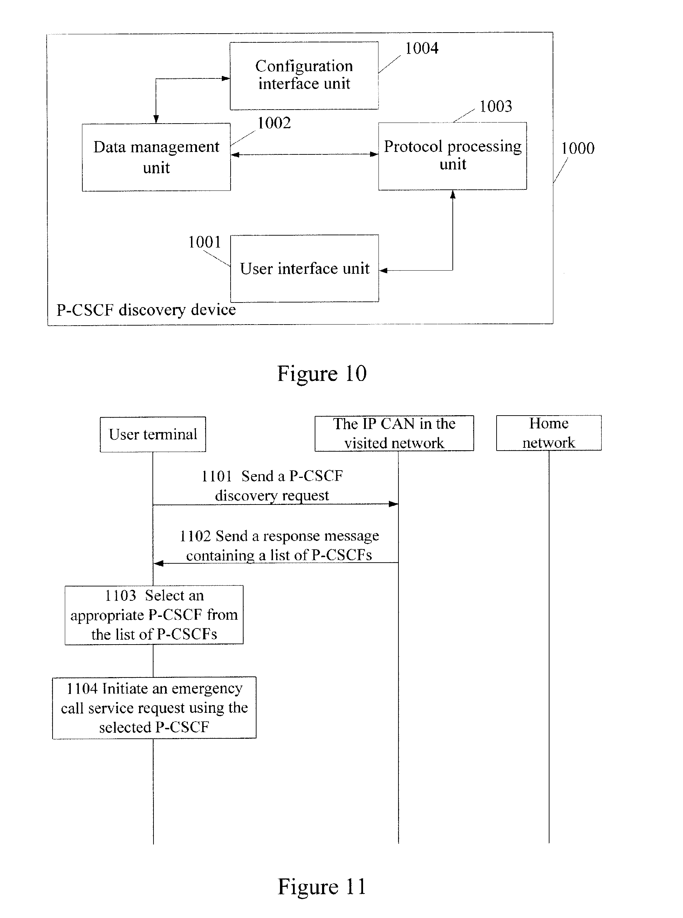

The detailed implementation method of the system for a user accessing a network according to the second embodiment of the present invention has been described above. Refer to Figures 9 and 10 for the detailed structures of the user terminal 800 and the P-CSCF discovery device 1000 in the system respectively.

Figure 9 is a diagram illustrating a structure of a user terminal according to the second embodiment of the present invention. As shown in Figure 9, the user terminal 800 specifically includes a network element attribute requirement reception unit 901, a network element information obtaining unit 904, a network element selection unit 902, and a network element registration unit 903.

The network element attribute requirement reception unit 901 is configured to receive information of the requirement for the attribute of a network element input by the user, and send the information to the network element selection unit 902. The network element information obtaining unit 904 is configured to send a P-CSCF discovery request to the P-CSCF discovery device 1000, receive a P-CSCF discovery request response from the P-CSCF discovery device 1000 to obtain the information of the attributes of P-CSCFs, and send the information of the attributes to the network element selection unit 902. The network element selection unit 902 is configured to select a P-CSCF meeting the requirement for the attribute of a network element according to the information of the attributes, and send the information of the selected P-CSCF to the network element registration unit 903. The network element registration unit 903 is configured to initiate registration to the P-CSCF selected by the network element selection unit 902.

Figure 10 is a diagram illustrating a structure of a P-CSCF discovery device according to the second embodiment of the present invention. The P-CSCF discovery device 1000 in the system shown in Figure 8 is configured to discover a P-CSCF when an emergency call service request is initiated in the visited network. As shown in Figure 10, the P-CSCF discovery device includes: a user interface unit 1001, a data management unit 1002, a protocol processing unit 1003, and a configuration interface unit 1004. As can be seen, the P-CSCF discovery unit 1000 according to this embodiment includes the configuration interface unit 1004 which is not included in the P-CSCF discovery device 600 according to the first embodiment.

The user interface unit 1001 is configured to receive and processes the P-CSCF discovery request (i.e. a DHCP request message) sent by the user terminal 800 shown in Figure 8, send a P-CSCF attribute query message to the protocol processing unit 1003 according to the P-CSCF discovery request, and receive a response message sent by the protocol processing unit 1003. The user interface unit 1001 sends to the user terminal 800 shown in Figure 8 a DHCP request response message containing a list of the information of all available P-CSCFs. The data management unit 1002 is configured to store the information of the attributes of P-CSCFs in the network. The protocol processing unit 1003 is configured to receive the P-CSCF attribute query message sent by the user interface unit 1001, obtain information of an attribute of a P-CSCF meeting the requirement from the data management unit 1002, generate the query response message containing a list of the information of the available P-CSCFs, and send the response message to the user interface unit 1001. The configuration interface unit 1004 is configured to receive attribute information of the P-CSCF sent by the P-CSCF configuration server 1010 shown in Figure 8 if the attribute of a P-CSCF in the network changes, and update the information of the attribute of the P-CSCF in the data management unit 1002 according to the change.

Since the IP CAN in this embodiment is a DSL network, the interface protocol between the user interface unit 1001 and the user terminal 800 shown in Figure 8 is the DHCP protocol.

As can be seen from Figure 8, compared with the user terminal 400 according to the first embodiment, the user terminal 800 in this embodiment further includes the network element information obtaining unit 904. The network element information obtaining unit 904 is configured to send the attaching request to the IP CAN. The attaching request includes no requirement for the attribute of a P-CSCF, instead, the network element information obtaining unit 904 receives the attaching request response message containing information of the attributes of all the available P-CSCFs in the network. The network element information obtaining unit 904 sends the information of the attributes of the available P-CSCFs to the network element selection unit 902 which selects a network element.

It can be seen from Figure 10 that the information of the attributes of P-CSCFs in the data management unit 1002 may be updated in real time using the P-CSCF configuration interface unit 104 added in the P-CSCF discovery device according to this embodiment. The information of the attribute of a P-CSCF is updated by the P-CSCF configuration server 1010 shown in Figure 8 in this embodiment. Alternatively, the information of the attribute of a P-CSCF may also be updated manually by a network manager. In addition, the structure of the P-CSCF discovery device 1000 may also be adopted in the first embodiment, and thus real time update of the information of the attributes of P-CSCFs in the corresponding data management unit is implemented.

Figure 11 is a flow chart of a method for a user accessing a network according to the second embodiment of the present invention. As shown in Figure 11, the method is described below.

1101: The user terminal 800 sends to the IP CAN 822 in the visited network 820 an attaching request, i.e. a P-CSCF discovery request, for being attached to the IP access network.

Because the IP CAN 822 in this embodiment is a DSL network, the attaching request is a DHCP message.

1102: The IP CAN 822 in the visited network 820 sends to the user terminal 800 an attaching request response message containing a list of P-CSCFs.

The response message is a DHCP request response message. Option parameters of the DHCP request response message is extended and the extended option parameters are used to contain the list of P-CSCFs. The list of P-CSCFs at least includes addresses of available P-CSCFs and attribute information indicating whether the P-CSCFs can be used for an emergency call service. Of course, the list of P-CSCFs may also include other attribute information such as geographical location information and version information of supported IMS.

1103: The user terminal 800 selects an appropriate P-CSCF from the list of P-CSCFs.

In 1103, the user terminal 800 determines that the requirement for the attribute of a network element should include supporting an emergency call service. Therefore, the user terminal 800 selects a P-CSCF meeting the requirement for the attribute of a network element according to the information of the various attributes in the list of P-CSCFs. The selected P-CSCF can at least be used for an emergency call service.

1104: The user terminal 800 initiates the emergency call service request using the selected P-CSCF when the user terminal 800 is to initiate the emergency call service request.

By now, the process for a user accessing a network during the emergency call service request is finished. And the emergency call service request sent by the user terminal 800 through the visited network 820 will not fail.

In this embodiment, the user terminal 800 selects, from the attaching request response message containing the information of the attributes of available P-CSCFs according to the requirement for the attribute of a network element determined by the user terminal 800, a P-CSCF meeting the requirement for the attribute of a network element to access. Alternatively, the user terminal 800 may also send to the IP access network the attaching request containing the information of the requirement for the attribute of a network element, and the IP access network sends the attaching request response message containing the information of the access network element meeting the requirement for the attribute of a network element instead of the information of the attributes of all the available access network elements.

As can be seen from the above, according to this embodiment, the user terminal 800 may determine the requirement for the attribute of a network element before being attached to the IP access network, and select a P-CSCF meeting the requirement for the attribute of a network element to access according to the information of the attributes of available P-CSCFs contained in the attaching request response message from the IP access network. Thus, the user terminal 800 may directly select an appropriate P-CSCF in the visited network 820 to which the emergency call service request is sent. In other words, the user terminal 800 initiatively selects the network element meeting the requirement for the attribute of a network element to access according to the method of this embodiment.

However, in the first embodiment, the home network 410 sends the requirement for the attribute of a network element to the user terminal 400 only after the user terminal 400 has initiated an emergency call service request through the P-CSCF in the home network 410. The user terminal 400 initiates the emergency call service request in the visited network 420 upon receiving the information of the requirement for the attribute of a network element. In other words, according to the method in accordance with the first embodiment, the user terminal 400 passively selects a network element meeting the requirement for the attribute of a network element to access upon being notified by the network.

In this embodiment, when the user terminal 800 is roaming, the visited network 820 of the user terminal 800 is the core network where the user terminal 800 is roaming, and when the user terminal 800 is not roaming, the visited network 820 of the user terminal 800 is the home network of the user terminal 800. The visited network 820 in this embodiment is an IMS network. Alternatively, the visited network 820 may also be a circuit switched network and an IMS-based Public Switched Telephone Network/Integrated Services Digital Network (PSTN/ISDN) Emulation Subsystem (PES) network. The IP CAN 822 in the visited network 820 is a DSL network. Of course, the IP CAN 822 may also be other fixed networks such as WLAN, or a GPRS network. For the different networks, the types of messages to be sent are different.

Embodiment 3

A terminal device may be managed and the firmware may be updated by the Device Management/Client Provisioning (DM/CP) of the Open Mobile Alliance (OMA), and the interface between the DM/CP and the terminal device may adopt the Hypertext Transfer Protocol (HTTP), Wireless Session Protocol (WSP), Object Exchange Protocol (OBEX) or Synchronization Mark-up Language (SyncML).

According to a third embodiment, another method for a user accessing a network is provided. In the method, a list of available access network elements including one or more access network elements and the attributes thereof is sent to the user terminal using the device management function based on the OMA DM/CP standards. The attribute includes: location information of a network element, and/or a capability of a network element, and/or a service capability of supporting different types of terminals. The user selects an access network element meeting the capability requirement of the user service according to the attributes of the network elements. The user terminal sends an access request such as a SIP registration message to the network element.

For example, in the case that a user needs to initiate an emergency call service, the user selects a P-CSCF in the visited network from the list of access network elements and the user terminal sends a registration message to the selected P-CSCF because an emergency call service can be provided only through a P-CSCF in the visited network. For another example, in case that a mobile terminal adopting GPRS access needs to initiate an emergency call service, the mobile terminal selects a P-CSCF supporting GPRS access to process the service.

In this embodiment, it is supposed that both the visited network and the home network of the user terminal are IMS networks while the IP CAN in the visited network is a DSL network.

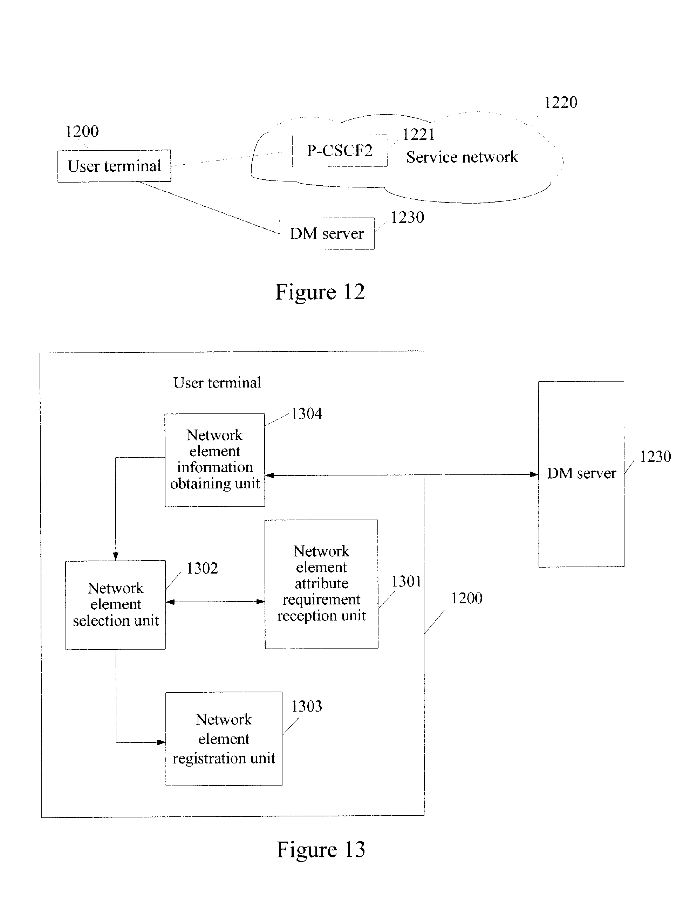

The method for a user accessing a network provided by this embodiment has been described above. This embodiment also provides a system for a user accessing a network which is applicable to implementing the method. Figure 12 is a diagram illustrating a structure of a system for a user accessing a network according to the third embodiment of the present invention. As shown in Figure 12, the system includes a user terminal 1200, a service network 1220 and a DM server 1230. The service network 1220 includes a P-CSCF2 1221.

The user terminal 1200 in the system obtains the information of the attributes of available access network elements from the DM server 1230, i.e. a list of available network elements and attribute information, and selects the P-CSCF2 1221 meeting the requirement for the attribute of a network element from the list of P-CSCFs and initiates an emergency call service request. The service network 1220 is the network where the user terminal is located and may be an IMS network or a circuit switched network or IMS-based PES network.

The system for a user accessing a network according to the third embodiment of the present invention has been described above. Refer to Figure 13 for the detailed structure of the user terminal 800 and the connection relation between the user terminal 1200 and the DM server 1230 in the system.

As shown in Figure 13, the user terminal 1200 specifically includes a network element attribute requirement reception unit 1301, a network element information obtaining unit 1304, a network element selection unit 1302, and a network element registration unit 1303.

The network element attribute requirement reception unit 1301 is configured to receive information of the requirement for the attribute of a network element input by the user, and send the information to the network element selection unit 1302. The network element information obtaining unit 1304 is configured to obtain a list of available P-CSCFs and the information of the attributes from the DM server 1230, and send the information of the attributes to the network element selection unit 1302. The network element selection unit 1302 is configured to select a P-CSCF meeting the requirement for the attribute of a network element according to the information of the attributes, and send the information of the P-CSCF to the network element registration unit 1303. The network element registration unit 1303 is configured to initiate registration to the P-CSCF selected by the network element selection unit 1302.

The interface protocol between the DM server 1230 and the network element information obtaining unit 1304 in the user terminal 1200 may be the HTTP, WSP, OBEX or SyncML in this embodiment. The interaction of the information of the attributes of the network elements is performed using the above interface protocol.

It can be seen from Figure 13 that the structure of the user terminal 1200 according to this embodiment is the same as that of the user terminal 800 according to the second embodiment. However, the network element information obtaining unit 1304 has a function different from that of the network element information obtaining unit 904 shown in Figure 9. The network element information obtaining unit 1304 according to this embodiment interacts with the DM server 1230 to obtain the information of the attributes of available P-CSCFs.

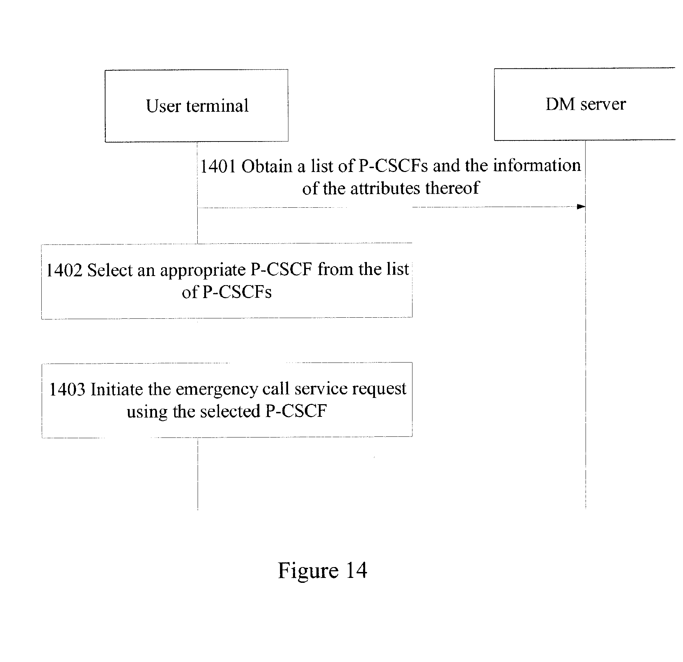

Figure 14 is a flow chart of a method for a user accessing a network according to the third embodiment of the present invention. As shown in Figure 14, the method is described below.

1401: The user terminal 1200 obtains a list of available P-CSCFs from the DM server 1230.

The list of P-CSCFs includes at least the addresses of the P-CSCFs and the attribute information indicating whether the P-CSCFs can be used for an emergency call service. Of course, the list of available P-CSCFs may also include other attribute information such as geographical location information and version information of the supported IMS.

The method for the user terminal 1200 obtaining a list of available P-CSCFs from the DM server 1230 in 1401 may include:

the user terminal 1200 sends a P-CSCF list request to the DM server 1230 and the DM server 1230 sends a list of available P-CSCFs to the user terminal 1200; or

the DM server 1230 initiatively sends a list of available P-CSCFs to the user terminal 1200.

In the latter manner, the DM server 1230 may send a list of available P-CSCFs to the user terminal 1200 once the user terminal 1200 moves into the network where the DM server 1230 is located, or sends a list of available P-CSCFs to the user terminal 1200 periodically at a predetermined interval.

1402: The user terminal 1200 selects an appropriate P-CSCF from the list of P-CSCFs.

In this 1402, the user terminal 1200 determines that the requirement for the attribute of a network element should include supporting an emergency call service. Therefore, the user terminal 1200 selects a P-CSCF meeting the requirement for the attribute of a network element according to the information of the various attributes in the list of P-CSCFs. The selected P-CSCF can at least be used for an emergency call service.

1403: The user terminal 1200 sends the emergency call service request using the selected P-CSCF.

The process for a user accessing a network during the emergency call service request is finished. And the emergency call service request sent by the user terminal 1200 through the visited network will not fail.

The list of available access network elements is sent to the user terminal 1200 using the DM server 1200 in this embodiment. Alternatively, the function may be implemented using other network entities. Meanwhile, the network entity implementing the function of sending a list of available access network elements may be located in the core network where the user terminal is currently located.

As can be seen from the above, the method for a user accessing a network in the third embodiment differs from the method for a user accessing a network in the first embodiment or the second embodiment. In the third embodiment, the user terminal 1200 obtains the information of the attributes of available access network elements using the device management function based on the OMA DM/CP standards, selects a network element meeting the requirement from the available access network elements, and initiates a service request to the selected network element.

Embodiments of the present invention are described by taking the emergency call service as an example. In fact, the present invention is also applicable to other service types such as the Quality of Service guarantee. According to the method and system according to the present invention, a user terminal may select a network element meeting the service capability requirement of the current service to access according to information of the attributes of access network elements. Thus, the user service may be implemented normally.

As can be seen from the above, according to the technical solutions in accordance with the embodiments of the present invention, the user terminal selects the network element meeting the capability requirement of the user service according to the requirement for the attribute of a network element to access, and thus the user service requested by the user terminal may be implemented normally. Moreover, the method for a user terminal obtaining the requirement for the attribute of a network element may include: the user terminal determines the requirement for the attribute of a network element according to the service type, and the user terminal initiatively selects a network element meeting the attribute requirement to access when being attached to the IP access network. Or, the method for a user terminal obtaining the requirement for the attribute of a network element may include: the user terminal sends a service request to the service network upon entering the service network, the service network determines the requirement for the attribute of a network element of the service according to the request of the user terminal and notifies the user terminal of the requirement for the attribute of a network element to request the user terminal to re-access the network. In other words, the user terminal may obtain the requirement for the attribute of a network element in the manner of selecting initiatively or being notified passively.

The above are only preferred embodiments of the present invention and are not for use in limiting the protection scope thereof. Any modification, equivalent substitution, and improvement without departing from the principle of the present invention should be covered in the protection scope of the present invention.

## Claims

1. A method for a user accessing a network, comprising:
selecting, by a user terminal, according to a requirement for an attribute of a network element, a network element meeting a capability requirement of a user service, and
accessing the network element meeting the capability requirement of the user service.

2. The method of claim 1, further comprising:
determining, by the user terminal, the requirement for the attribute of a network element according to notification information sent by the network or according to a service to be used.

3. The method of claim 2, wherein the notification information is sent by the network to the user terminal to notify the user terminal to select the network element meeting the capability requirement if the network detects that a network element being accessed by the user terminal does not meet the capability requirement of the service.

4. The method of claim 3, wherein the notification information is contained in a Session Initiation Protocol, SIP, message.

5. The method of claim 1, wherein selecting a network element meeting a capability requirement of a user service comprises:
initiating, by the user terminal, a network attaching request containing the requirement for the attribute of a network element, and returning, by the network, the network element meeting the capability requirement of the user service; or
selecting, by the user terminal, according to attributes of network elements obtained, a network element with an attribute meeting the requirement for the attribute of a network element.

6. The method of claim 5, wherein obtaining attributes of network elements comprises:
initiating, by the user terminal, a network attaching request and returning, by the network, the attributes of the network elements; or
sending, by a network entity, the attributes of the network elements according to a request from the user terminal; or
sending, by the network entity, the attributes of the network elements initiatively.

7. The method of claim 6, wherein the attributes of the network elements comprise: a service capability and/or location information.

8. The method of claim 7, wherein the service capability comprises at least one of: an emergency call service capability, a Quality of Service ensuring capability, different types of terminals accessing a network element, Voice Call Continuity (VCC), and a positioning service capability.

9. The method of any of claims 1 to 8, wherein the network element is a Proxy Call Session Control Function (P-CSCF) in an Internet Protocol (IP) Multimedia Subsystem (IMS) network.

10. The method of Claim 9, wherein selecting the P-CSCF meeting the capability requirement of the service comprises:
initiating, by the user terminal, a P-CSCF discovery process and adding indication information indicating the requirement for the attribute of a P-CSCF into a P-CSCF discovery request sent to an IP access network; and
selecting, by the IP access network, the P-CSCF meeting the requirement for the attribute upon receiving the P-CSCF discovery request, and returning a P-CSCF discovery request response containing information of the P-CSCF meeting the requirement for the attribute.

11. The method of claim 10, wherein
if the user terminal is to be attached to a fixed network, adding indication information indicating the requirement for the attribute of a P-CSCF into a P-CSCF discovery request comprises:
adding an option parameter for indicating the requirement for the attribute of a P-CSCF into a Dynamical Host Configure Protocol, DHCP, request message;
if the user terminal is to be attached to a General Packet Radio Service, GPRS, network, adding indication information indicating the requirement for the attribute of a P-CSCF into a P-CSCF discovery request comprises:
sending a Packet Data Protocol, PDP, activation request through a designated Access Point Name, APN, to indicate the requirement for the attribute of a P-CSCF.

12. The method of claim 9, wherein selecting the P-CSCF meeting the capability requirement of the service comprises:
initiating, by the user terminal, a P-CSCF discovery process and sending a P-CSCF discovery request to an IP access network;
sending, by the IP access network, a response message containing attributes of available P-CSCFs to the user terminal;
selecting, by the user terminal, the P-CSCF meeting the capability requirement of the service according to the attributes of the available P-CSCFs.

13. The method of claim 12, wherein
if the user terminal is to be attached to a fixed network, the response message is a Dynamical Host Configure Protocol (DHCP) request response message and an option parameter is added into the DHCP request response message to contain the attributes of the available P-CSCFs.

14. The method of claim 9, wherein selecting the P-CSCF meeting the capability requirement of the service comprises:
requesting, by the user terminal, a network entity for a P-CSCF list;
sending, by the network entity, a P-CSCF list containing attributes of available P-CSCFs to the user terminal; and
selecting, by the user terminal, the P-CSCF meeting the capability requirement of the service according to the attributes of the available P-CSCFs.

15. The method of claim 9, wherein selecting a P-CSCF meeting the capability requirement of the service comprises:
sending, by a network entity, an available P-CSCF list containing attributes of available P-CSCFs initiatively to the user terminal; and
selecting, by the user terminal, the P-CSCF meeting the capability requirement of the service according to the attributes of the available P-CSCFs.

16. A system for a user to access a network, comprising:
a user terminal, configured to select a network element meeting a capability requirement of a user service according to a requirement for an attribute of a network element and access the network element selected; and
a service network, configured to provide the user terminal with the network element meeting the capability requirement of the user service.

17. The system of claim 16, wherein the user terminal comprises:
a network element attribute requirement reception unit, configured to receive notification information sent by the service network, determine the requirement for the attribute of a network element according to the notification information or the user service, and send the requirement for the attribute of a network element;
a network element selection unit, configured to receive the requirement for the attribute of a network element from the network element attribute requirement reception unit, send to the service network an attaching request containing the requirement for the attribute of a network element; and send information of the network element meeting the capability requirement of the service from the service network, or select the network element meeting the capability requirement of the service according to attributes of network elements and send information of the network element selected; and
a network element registration unit, configured to initiate registration to the network element selected by the network element selection unit.

18. The system of claim 17, wherein the user terminal further comprises:
a network element information obtaining unit, configured to obtain the attributes of network elements, and send the attributes of network elements to the network element selection unit.

19. The system of any of claims 16-18, wherein the service network is an IP Multimedia Subsystem, IMS, network;
the network element is a Proxy Call Session Control Function, P-CSCF; and
the system further comprises an IP access network, configured to discover an available P-CSCF, and send an attribute of the available P-CSCF to the user terminal.

20. The system of any of claims 16-18, wherein the system further comprises a network entity, configured to receive a request for the attributes of network elements from the user terminal, and send the attributes of network elements to the user terminal; or initiatively send the attributes of network elements to the user terminal.

21. The system of claim 20, wherein an interface protocol between the network entity and the user terminal is one of Hypertext Transfer Protocol (HTTP), Wireless Session Protocol (WSP), Object Exchange Protocol (OBEX) and Synchronization Mark-up Language (SyncML).

22. The system of claim 20, wherein the network entity is a device management/client provisioning server based on a Device Management/Client Provisioning (DM/CP) standard of Open Mobile Alliance (OMA).

23. The system of claim 19, wherein the IP access network comprises a P-CSCF discovery device, configured to receive a P-CSCF discovery request sent by the user terminal, and send to the user terminal a P-CSCF discovery request response containing the attribute of the available P-CSCF.

24. The method of claim 23, wherein the P-CSCF discovery device comprises: a user interface unit, a data management unit and a protocol processing unit;
the user interface unit is configured to receive and process the P-CSCF discovery request sent by the user terminal, send a P-CSCF attribute query message to the protocol processing unit, and send a P-CSCF discovery request response containing the attribute of the available P-CSCF to the user terminal upon receiving a query response message of the protocol processing unit;
the data management unit is configured to store attributes of P-CSCFs in the network; and
the protocol processing unit is configured to receive the P-CSCF attribute query message sent by the user interface unit, obtain the attribute of the available P-CSCF by querying the data management unit, generate the query response message containing the attribute of the available P-CSCF, and send the query response message to the user interface unit.

25. The system of claim 24, wherein the P-CSCF discovery device further comprises:
a configuration interface unit, configured to receive attribute information of a P-CSCF in the network sent by a network manager, and store the attribute information into the data management unit.

26. The system of claim 24, wherein the system further comprises a P-CSCF attribute configuration server; and the P-CSCF discovery device further comprises a configuration interface unit;
the P-CSCF attribute configuration server is configured to send attribute information of a P-CSCF in the network to the configuration interface unit; and
the configuration interface unit is configured to receive the attribute information of a P-CSCF in the network sent by the P-CSCF attribute configuration server and store the attribute information of a P-CSCF into the data management unit.

27. The system of claim 24, wherein an interface protocol of the user interface unit is Dynamical Host Configure Protocol (DHCP) or General Packet Radio Service (GPRS) protocol.

28. A user terminal device, comprising:
a network element attribute requirement reception unit, configured to receive notification information sent by a service network, determine a requirement for an attribute of a network element according to the notification information or a user service, and send the requirement for the attribute of a network element;
a network element selection unit, configured to receive the requirement for the attribute of a network element from the network element attribute requirement reception unit, send an attaching request containing the requirement for the attribute of a network element to the service network; and send information of a network element meeting the capability requirement of the service received from the service network, or select the network element meeting the capability requirement of the service according to attributes of network elements and send information of the network element selected; and
a network element registration unit, configured to initiate registration to the network element selected by the network element selection unit.

29. The device of claim 28, further comprising:
a network element information obtaining unit, configured to obtain the attributes of network elements, and send the attributes of the network elements to the network element selection unit.

30. A Proxy Call Session Control Function, P-CSCF, discovery device, comprising: a user interface unit, a data management unit and a protocol processing unit; wherein
the user interface unit is configured to receive and process a P-CSCF discovery request sent by a user terminal, send a P-CSCF attribute query message to the protocol processing unit, and send a P-CSCF discovery request response containing an attribute of an available P-CSCF to the user terminal upon receiving a query response message from the protocol processing unit;
the data management unit is configured to store attributes of P-CSCFs in a network;
the protocol processing unit is configured to receive the P-CSCF attribute query message sent by the user interface unit, obtain the attribute of the available P-CSCF by querying the data management unit, generate the query response message containing the attribute of the available P-CSCF, and send the query response message to the user interface unit.
